# EUROPÄISCHE PATENTSCHRIFT

(11) **EP 1 085 045 B1**
(45) Veröffentlichungstag und Bekanntmachung des Hinweises auf die Patenterteilung: **29.01.2003**
(21) Anmeldenummer: 00119752.4
(22) Anmeldetag: 11.09.2000
(51) Int. Cl.: C08K 5/5419, C08K 5/548, B60C 1/00, C08L 9/06, C08K 5/5415, C08K 13/02

(54) **Kautschukmischung für Laufstreifen von Reifen**
Rubber composition for vehicle tyre tread
Composition de caoutchouc pour bande de roulement d'un pneumatique pour véhicule

(30) Priorität: 17.09.1999 DE 19944657
(43) Veröffentlichungstag der Anmeldung: 21.03.2001
(73) Patentinhaber: Continental Aktiengesellschaft, 30165 Hannover (DE)
(72) Erfinder: Söhnen, Dietmar, Dr., 31867 Lauenau (DE); Neddermann, Ralf, Dr., 30167 Hannover (DE); Meier, Martin, Dr., 59457 Werl (DE); Solovieva, Janna, 30173 Hannover (DE); Dumke, Joachim, 31275 Lehrte (DE); Goulao, Luisa, 30161 Hannover (DE); Wiese, Ursula, Dr., 30657 Hannover (DE)

(56) Entgegenhaltungen:
- WO-A-97/07165
- WO-A-99/15583
- DE-A- 2 536 674

## Beschreibung

Die Erfindung betrifft eine schwefelvemetzbare Kautschukmischung für die Herstellung von Laufstreifen für Reifen, die als Kautschukkomponenten zumindest Styrol-Butadien-Copolymer und gegebenenfalls Polybutadien und/oder Polyisopren, als Füllstoffe zumindest Ruß und Kieselsäure, zumindest ein Silan-Kupplungsagens sowie weitere übliche Zusatzstoffe enthält.

Da die Fahreigenschaften eines Reifens in einem großen Umfang von der Kautschukzusammensetzung des Laufstreifens abhängig sind, werden besonders hohe Anforderungen an die Zusammensetzung der Laufstreifenmischung gestellt. So wurden vielfältige Versuche durchgeführt, die Laufstreifenmischungen hinsichtlich ihrer Polymerkomponenten und ihrer Füllstoffe zu variieren. Es ist beispielsweise bekannt, der Kautschukmischung als Füllstoffe Ruß und/oder Kieselsäure zuzusetzen. Dabei hat der Einsatz kieselsäurehaltiger Mischungen auch in anderen Verwendungsbereichen Einzug gefunden, z. B. bei Antriebsriemen, Transportbändern usw..

Hochaktive Kieselsäure enthaltende Mischungen zeigen gegenüber Mischungen, die nur Ruß enthalten, den Vorteil, daß sie dem Reifen bei Fahrzeugen mit einem Antiblockiersystem (ABS) ein besonders gutes Naßrutschverhalten verleihen. Des weiteren verleihen die Kieselsäure enthaltenden Laufstreifenmischungen dem Reifen einen geringen Rollwiderstand, was einen verminderten Kraftstoffverbrauch mit sich bringt. Außerdem kann die Verwendung von Kieselsäure in Reifenlaufstreifen auch Vorteile bei den Wintereigenschaften, nämlich bessere Traktion auf Eis und Schnee, ergeben.

Die Verwendung von hochaktiver Kieselsäure führt aber durch die große spezifische hydrophile Oberfläche zu einer hohen Viskosität der Rohmischungen und damit zu schwieriger Verarbeitbarkeit. Durch die Verwendung von bifunktionellen Organosilanen kann diesem Effekt zum Beispiel entgegengewirkt werden. Dabei reagiert das Silan in einer ersten Stufe (im Kneter) unter Abspaltung von Alkoholen mit den Silanolgruppen der Kieselsäureoberfläche. Diese Reaktion wird Hydrophobierung genannt. In der zweiten Stufe während der Vulkanisation ermöglicht die zweite reaktive Gruppe des Silans, z. B. eine eingebaute Tetrasulfid-Gruppierung nach Aufspaltung, eine chemische Anbindung an den Kautschuk. Mit Silan als Verstärkungsadditiv wird demnach eine direkte chemische Bindung zwischen Füllstoff und Kautschuk erreicht, deshalb werden diese Stoffe auch als Kupplungsagenzien bezeichnet. Das Organosilan bewirkt infolge der Hydrophobierung eine Verringerung der Viskosität unvulkanisierter kieselsäurehaltiger Mischungen sowie durch die Anbindung an die Kautschukmoleküle einen Verstärkungseffekt in den Vulkanisaten. Mischungen mit Verstärkungsadditiven zeichnen sich durch eine hohe Reversionsbeständigkeit und einen niedrigen Wärmeaufbau bei dynamischer Wechselbeanspruchung (Heat-build-up) aus.

Eine Vielzahl von Verstärkungsadditiven werden für die Kupplung zwischen Kieselsäure und Kautschuk im Stand der Technik vorgeschlagen. Dabei finden vor allem die Organosilanpolysulfide mit 2 bis 8 Schwefelatomen in der Schwefelbrücke bei der Verstärkung von schwefelvulkaniserbaren Kautschukmischungen Verwendung. Die Schwefelbrücke wird dabei zur Anbindung an den Kautschuk gespalten, und über die Schwefelatome erfolgt dann die Anbindung an den Kautschuk. So sind z. B. aus der DE 25 36 674 und der DE 22 55 577 vulkanisierbare Kautschukmischungen bekannt, die als Verstärkungsadditive Organosilane der allgemeinen Formel Z-Alk-Sₙ-Alk-Z enthalten, wobei n eine Zahl von 2,0 bis 6,0 darstellt. Damit beide Gruppen Z eines Moleküls für die Kupplung zwischen Kieselsäure und Kautschuk genutzt werden können und eine Anbindung an den Kautschuk überhaupt stattfinden kann, müssen demnach für ein als Kupplungsagens wirksames Organosilanpolysulfid mindestens zwei Schwefelatome die Brücke bilden. Diese genannten Additive beeinflussen die Herstellung der Kautschukmischung und die Eigenschaften der Vulkanisate günstig. Zusätzlich ist mit solchen Organosilanpolysulfiden, die 3 oder mehr Schwefelatome in der Brücke aufweisen, eine Vernetzung ohne Zusatz von elementarem Schwefel möglich, da diese Verbindungen bei erhöhten Temperaturen als Schwefelspender wirken.

Ein anderer Nachteil, den die Verwendung von Kieselsäure in Kautschukmischungen mit sich bringt, ist der erhöhte Abrieb der Vulkanisate im Vergleich zu Vulkanisaten aus reinen Rußmischungen. Diesem kann zwar durch Zumischung spezieller Vulkanisationsbeschleuniger und spezieller Promotoren, durch die Verwendung von Kupplungsreagenzien oder abriebresistenteren Polymeren wie Polybutadien sowie auch durch die Anwendung besonderer Mischverfahren mit nachträglichen Wärmebehandlungen entgegengewirkt werden, der dem Fachmann bekannte Konflikt zwischen den sich gegenläufig verhaltenden Eigenschaften Abrieb und Naßgriff beim ABS-Bremsen kann aber kaum dadurch gelöst werden. Ebenso gehen sowohl eine Verbesserung der Wintereigenschaften als auch eine Verbesserung des Rollwiderstandes im allgemeinen mit einer Verschlechterung des Naßgriffs beim ABS-Bremsen einher.

Aus der WO 99/15583 ist es bekannt, für eine Kautschukmischung oder einen speziellen Masterbatch (Vormischung) mit lösungspolymerisiertem Styrol-Butadien-Copolymer und Kieselsäure als ein mögliches Silan-Kupplungsagens ein Gemisch aus 3,3'-Bis(triethoxysilylpropyl)monosulfid (entspricht Bis[3-(triethoxysilyl)propyl]monosulfan), 3,3'-Bis(triethoxysilylpropyl)disulfid, 3,3'-Bis(triethoxysilylpropyl)trisulfid und 3,3'-Bis(triethoxysilylpropyl)tetrasulfid und höheren Sulfan-Homologen zu verwenden. Setzt man solche Mischungen oder Masterbatche mit lösungspolymerisiertem Styrol-Butadien-Copolymer und Kieselsäure ohne Ruß für die Herstellung von Reifenlaufstreifen ein, so soll man im Vergleich zu reinen Ruß-Mischungen Reifen mit verbesserter Traktion, verbessertem Rollwiderstand und verbessertem Abrieb erhalten. Es hat sich aber gezeigt, daß Reifen mit einer Laufstreifenmischung aus einer solchen Mischung oder dem speziellen Masterbatch noch nicht das gewünschte Eigenschaftsniveau im Hinblick auf das Trockenbremsen und auf das Aquaplaningverhalten in Querrichtung (Aquaplaning lateral) aufweisen.

Der vorliegenden Erfindung liegt nun die Aufgabe zugrunde, eine schwefelvernetzbare, Kieselsäure enthaltende Kautschukmischung für die Herstellung von Laufstreifen für Reifen bereitzustellen, die in vulkanisierter Form ein verbessertes Abriebverhalten ohne negative Effekte auf das Werteniveau anderer erwünschter Vulkanisateigenschaften zeigt und beim Reifen zusätzlich zu dem verbesserten Abriebverhalten Verbesserungen in den Wintereigenschaften, im Trockenbremsen und im Aquaplaningverhalten in Querrichtung bei gleichzeitig gutem Naßgriff und geringem Rollwiderstand mit sich bringt.

Gelöst wird diese Aufgabe erfindungsgemäß dadurch, daß die Kautschukmischung 5 bis 30 phr (Gewichtsteile bezogen auf 100 Gewichtsteile der gesamten Kautschukkomponenten) Ruß, 10 bis 100 phr Kieselsäure, pro Gewichtsteil Kieselsäure 0,01 bis 0,15 Gewichtsteile Silan-Kupplungsagens sowie pro mol Silan-Kupplungsagens 0,05 bis 1 mol zumindest eines Organosilans mit der allgemeinen Formel Z-R¹-X-R¹-Z enthält,
- wobei Z ausgewählt ist aus der Gruppe bestehend aus: 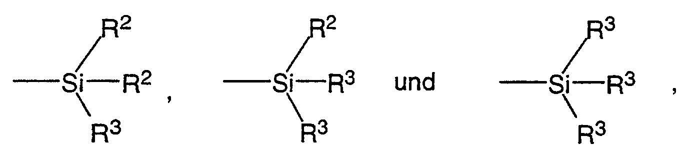
- worin R² eine Alkylgruppe mit 1 bis 4 Kohlenstoffatomen, eine Cycloalkylgruppe mit 5 bis 8 Kohlenstoffatomen oder ein Phenylrest ist, wobei die R² in einem Molekül gleich oder verschieden sein können, R³ eine Alkoxygruppe mit 1 bis 4 Kohlenstoffatomen, eine Cycloalkoxygruppe mit 5 bis 8 Kohlenstoffatomen oder ein Phenoxygruppe ist, wobei die R³ in einem Molekül gleich oder verschieden sein können,
- wobei R¹ eine substituierte oder unsubstituierte, gegebenenfalls ungesättigte, gegebenenfalls cyclische, Alkylengruppe mit insgesamt 1 bis 18 Kohlenstoffatomen oder eine substituierte oder unsubstituierte Arylengruppe mit insgesamt 6 bis 12 Kohlenstoffatomen ist, wobei die R¹ in einem Molekül gleich oder verschieden sein können,
- und wobei X ein Schwefelatom, ein Sauerstoffatom oder eine CH₂-Gruppe ist.

Die in dieser Schrift verwendete Angabe phr (parts per hundred parts of rubber by weight) ist die in der Kautschukindustrie übliche Mengenangabe für Mischungen. Die Dosierung der Gewichtsteile der einzelnen Substanzen wird dabei stets auf 100 Gewichtsteile der Gesamtkautschukmasse bezogen.

Es war überraschend festzustellen, daß eine derartige Kombination von Ruß, Kieselsäure, Silan-Kupplungsagens und Organosilan der allgemeinen Formel Z-R¹-X-R¹-Z in schwefelvernetzbaren Kautschukmischungen mit den Kautschukkomponenten Styrol-Butadien-Copolymer und gegebenenfalls Polybutadien und/oder Polyisopren eine Möglichkeit offenbart, das Abriebverhalten von Kautschukvulkanisaten zu verbessern, ohne daß dabei größere Abstriche in den anderen gewünschten Vulkanisateigenschaften gemacht werden müssen, und darüber hinaus bei Verwendung dieser Mischungen für Reifenlaufstreifen das normalerweise gegenläufige Verhalten der Vulkanisateigenschaften Abrieb und Naßgriff und auch Wintereigenschaften und Naßgriff positiv dahingehend zu beeinflussen, daß die Verbesserung des Abriebs und der Wintereigenschaften keine Verschlechterung des Naßgriffs nach sich zieht und gleichzeitig das Trockenbremsen und das Aquaplaningverhalten in Querrichtung verbessert wird. Eine Verbesserung im Aquaplaningverhalten in Querrichtung bedeutet dabei, dass ein Wagen bei Kurvenfahrten auf nasser Straße nicht mehr so leicht beginnt auf der Wasseroberfläche in seitlicher Richtung zu schwimmen. Der Fachmann würde nicht erwarten, daß die Zudosierung eines Organosilans der allgemeinen Formel Z-R¹-X-R¹-Z mit den angegebenen Bedeutungen von Z, R¹ und X zu der Mischung mit Ruß, Kieselsäure und Silan-Kupplungsagens Vorteile in den Eigenschaften bringt, da das Organosilan nicht den üblicherweise verwendeten Silan-Kupplungsagenzien, die für positive Effekte in Kieselsäuremischungen bekannt sind, zuzuordnen ist. Das Organosilan besitzt nämlich keine endständige funktionale Gruppe, die die für Kupplungsagenzien typische chemische Anbindung an den Kautschuk ermöglicht. Auch eine Spaltungsreaktion, wie sie bei Silan-Kupplungsagenzien mit einer Schwefelkette aus 2 bis 8 Schwefelatomen erfolgt, kann im mittleren Molekülteil des Organosilans bei den Temperaturen der Mischungsverarbeitung nicht stattfinden, da keine leicht thermisch spaltbaren Gruppen vorhanden sind. Das Organosilan mit der allgemeinen Formel Z-R¹-X-R¹-Z kann sich also nur mit beiden Endgruppen Z des Moleküls unter Abspaltung von Alkoholen mit den Silanolgruppen der Kieselsäure verbinden. Es wirkt dabei während des Einmischprozesses durch die Hydrophobierungsreaktion als Dispergator und ermöglicht gleichzeitig die chemische Verknüpfung der Kieselsäureteilchen untereinander über das Organosilan als Brückenbildner. Des weiteren bewirkt es im Zusammenspiel mit der Kieselsäure und dem Silan-Kupplungsagens in den angegebenen Mengen eine optimale Verteilung der Kieselsäureteilchen in der Polymermatrix und eine stabile und optimierte Anbindung der Kieselsäure an die Polymermatrix. Die optimale Einarbeitung des Füllstoffs Ruß wird auf diese Weise ebenfalls erleichtert, was zu einer weiteren Verbesserung des Abriebs beiträgt.

Die erfindungsgemäße Kautschukmischung enthält 5 bis 30 phr Ruß. Enthält die Kautschukmischung weniger als 5 phr Ruß, muß man Einbußen beim Trockenbremsen und beim Aquaplaningverhalten in Querrichtung hinnehmen. Der Zusatz von Ruß bringt auch verarbeitungstechnische Vorteile. Die verwendeten Ruße sollten insbesondere folgende Charakteristika aufweisen: DBP-Zahl (ASTM D 2414) 90 bis 200 mL/100 g und CTAB-Zahl (ASTM D 3765) von 80 bis 170 m²/g. Das Verhältnis der Füllstoffe Kieselsäure zu Ruß kann vorteilhafterweise größer oder gleich 3 zu 1 sein. Benutzt man in der Mischung einen größeren Anteil an Ruß, so verschlechtert sich der Rollwiderstand.

Durch die Variation von R¹ in der allgemeinen Formel des Organosilans kann die Kettenlänge und die Kettenbeweglichkeit des Organosilans und damit auch die Dispergatorwirkung und das aufgebaute Füllstoffnetzwerk aus chemisch verknüpften Kieselsäureteilchen beeinflußt werden.

Bei einer bevorzugten Ausführungsform der Erfindung handelt es sich bei dem Strukturbaustein X des Organosilans um ein Schwefelatom.

Aus der Gruppe dieser Substanzen kommt insbesondere das Organosilan 3,3'-Bis(triethoxysilylpropyl)monosulfid in Frage. Die Verwendung dieser Substanz in Kautschukmischungen z. B. für Reifenlaufstreifen hat sich für die gewünschten Eigenschaften als besonders vorteilhaft herausgestellt. Bei dieser Substanz ist zusätzlich positiv zu vermerken, daß sie bei der Reaktion mit den Silanolgruppen als abzuspaltenden Alkohol nur Ethanol freisetzt und das Molekül keine aromatischen Strukturelemente aufweist. Diese Substanz ist demnach sowohl bei der Herstellung als auch bei der Verarbeitung eher als toxikologisch unbedenklich anzusehen.

Besonders bevorzugt ist, wenn die erfindungsgemäße Kautschukmischung 60 bis 90 phr Kieselsäure, pro Gewichtsteil Kieselsäure 0,05 bis 0,1 Gewichtsteile Silan-Kupplungsagens sowie pro mol Silan-Kupplungsagens 0,05 bis 0,6 mol zumindest eines Organosilans mit der angegebenen allgemeinen Formel enthält. Solch eine Kautschukmischung zeigt eine deutliche Verbesserung des Abriebverhaltens und bringt in Laufstreifen verwendet gleichzeitig eine Verbesserung der Wintereigenschaften sowie Vorteile beim Trockenbremsen und beim Aquaplaningverhalten in Querrichtung. Der Naßgriff beim ABS-Bremsen und der Rollwiderstand bleiben dabei nahezu auf unverändertem Niveau. Erhöht man bei einer solchen Kautschukmischung das Molverhältnis von Organosilan zu Silan-Kupplungsagens über den angegebenen Wert von 0,6, so erzielt man zwar noch Verbesserungen in den ersten vier genannten Reifeneigenschaften und vor allem das Abriebverhalten wird stark verbessert, allerdings wird dann der Naßgriff beim ABS-Bremsen ungünstiger und der Rollwiderstand wird größer.

Was den Kieselsäureanteil betrifft, kann im Rahmen der vorliegenden Erfindung grundsätzlich jede feinverteilte gefällte Kieselsäure eingesetzt werden, wie sie üblicherweise für die Herstellung von Kautschukmischungen verwendet wird. Dabei werden insbesondere solche Kieselsäuren als Füllstoff eingesetzt, die eine BET-Oberfläche (gemäß ASTM D 5604) von 35 bis 350 m²/g, vorzugsweise von 145 bis 270 m²/g, eine CTAB-Oberfläche (gemäß ASTM D 3765) von 30 bis 350 m²/g, vorzugsweise von 120 bis 285 m²/g, ein Porenvolumen (gemäß DIN 66133) von 0,2 bis 3,4 mUg, vorzugsweise von 0,7 bis 1,7 mUg und eine DBP-Zahl (gemäß ASTM D 2414) von 50 bis 300 mL/100 g, vorzugsweise von 150 bis 250 mL/100 g, besitzen. Als Kieselsäuren können somit z. B. jene des Typs VN3 (Handelsname) der Firma Degussa als auch hoch dispergierte Kieselsäuren, sogenannte HD-Kieselsäuren, (z. B. Ultrasil 7000 der Firma Degussa) zum Einsatz kommen.

Als Silan-Kupplungsagenzien zur Anbindung der Kieselsäure an das Polymersystem können ebenfalls alle dem Fachmann für die Verwendung in Kautschukmischungen bekannten Silan-Kupplungsagenzien verwendet werden. Solche aus dem Stand der Technik bekannten Kupplungsagenzien sind bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die evtl. auch nach Spaltung eine chemische Reaktion mit dem Polymer eingehen kann. Bei den letztgenannten Gruppen kann es sich dabei um die folgenden chemischen Gruppen handeln: -SCN, -SH, -NH₂ oder-Sₓ- (mit x = 2-8). So können als Silan-Kupplungsagens z. B. 3-Mercaptopropyltriethoxysilan, 3-Thiocyanato-propyltrimethoxysilan oder 3,3'-Bis(triethoxysilylpropyl)tetrasulfid (TESPT) bzw. das entsprechende Disulfid verwendet werden. TESPT kann dabei beispielsweise auch als Gemisch mit Industrieruß (Handelsname X50S der Firma Degussa) zugesetzt werden.

Gemäß einer bevorzugten Ausführungsform der Erfindung wird als Silan-Kupplungsagens zumindest ein Organosilanpolysulfid mit 2 bis 8 Schwefelatomen in der Kette verwendet. Diese Silan-Kupplungsreagenzien haben sich in der Reifenindustrie für Kieselsäure enthaltende Kautschukmischungen etabliert, da sie sehr gute Vulkanisat- und Reifeneigenschaften liefern und zudem bei 3 oder mehr Schwefelatomen in der Kette als Schwefelspender dienen können. Durch Zusammenspiel von Kieselsäure und Organosilan der allgemeinen Formel Z-R¹-X-R¹-Z mit einem Organosilanpolysulfid mit 2 bis 8 Schwefelatomen konnten die Reifeneigenschaften weiter optimiert werden.

Die schwefelvernetzbare Kautschukmischung enthält als Kautschukkomponente zumindest ein Styrol-Butadien-Copolymer. Dabei handelt es sich vorzugsweise um lösungspolymerisiertes Styrol-Butadien-Copolymer (S-SBR) mit einem Styrolgehalt von ca. 15 bis 45 Gew.-%, welches zum Beispiel unter Verwendung von Lithiumalkylen in organischem Lösungsmittel hergestellt werden kann. Der Einsatz von S-SBR in Laufstreifen mit Kieselsäure als Füllstoff bietet die Vorteile von verringertem Rollwiderstandes und Wärmeaufbau bei dynamischer Wechselbeanspruchung (Heat-build-up) aufgrund geringerer Hysterese. Es können aber auch emulsionspolymerisiertes Styrol-Butadien-Copolymer (E-SBR) sowie Mischungen aus E-SBR und S-SBR eingesetzt werden. Der Styrolgehalt des E-SBR beträgt ca. 15 bis 50 Gew.-% und es können die aus dem Stand der Technik bekannten Typen, die durch Copolymerisation von Styrol und 1,3-Butadien in wäßriger Emulsion erhalten wurden, verwendet werden. E-SBR in Mischungen kann im Vergleich zu S-SBR Verbesserungen bei der Verarbeitung mit sich bringen.

Als weitere Kautschukkomponente kann die Mischung Polybutadien enthalten. Dabei kann es sich sowohl um cis-1,4- als auch um vinyl-Polybutadien (40-90 mol% Vinyl-Gehalt) handeln. Bevorzugt ist die Verwendung von cis-1,4-Polybutadien mit einem cis-1,4-Anteil größer 90 mol%, welches z. B. durch Lösungspolymerisation in Anwesenheit von Katalysatoren vom Typ der seltenen Erden hergestellt werden kann. Solche cis-1,4-Polybutadiene besitzen niedrige Glastemperaturen, was sich positiv auf Rollwiderstand, Abrieb und Wintereigenschaften bei daraus hergestellten Reifen auswirkt.

Außerdem kann die Kautschukmischung als weitere Kautschukkomponente Polyisopren enthalten. Dabei kann es sich sowohl um cis-1,4-Polyisopren als auch um 3,4-Polyisopren handeln. Bevorzugt ist allerdings die Verwendung von cis-1,4-Polyisoprenen mit einem cis-1,4-Anteil > 90 mol%. Zum einen kann solch ein Polyisopren durch stereospezifische Polymerisation in Lösung mit Ziegler-Natta-Katalysatoren oder unter Verwendung von fein verteilten Lithiumalkylen erhalten werden. Zum anderen handelt es sich bei Naturkautschuk um ein solches cis-1,4 Polyisopren, der cis-1,4 Polyisopren-Anteil im Naturkautschuk ist größer 99 mol%. Naturkautschuk wird für die erfindungsgemäße Kautschukmischung bevorzugt eingesetzt. Dadurch läßt sich das Verarbeitungsverhalten verbessern und Rohfestigkeit, Konfektionsklebrigkeit, Kerbfestigkeit und Weiterreißfestigkeit der Vulkanisate nehmen zu.

Gemäß einer bevorzugten Ausführungsform der Erfindung enthält die Kautschukmischung 5 bis 100 phr lösungspolymerisiertes Styrol-Butadien-Copolymer, 0 bis 60 phr Polybutadien und 0 bis 60 phr cis-1,4-Polyisopren. Bei höheren Anteilen von Polybutadien (> 60 phr) treten verarbeitungstechnische Probleme bei der Herstellung der Kautschukmischung auf, die Kerb- und Weiterreißfestigkeit der Vulkanisate nimmt ab, und Reifen aus solch einer Mischung zeigen Beeinträchtigungen im Naßgriff. Bei Verwendung von mehr als 60 phr cis-1,4-Polyisopren verschlechtert sich bei Vulkanisaten aus kieselsäurehaltigen Mischungen der Abriebwiderstand.

Besonders bevorzugt ist, wenn die Kautschukmischung 10 bis 80 phr lösungspolymerisiertes Styrol-Butadien-Copolymer, 10 bis 50 phr Polybutadien und 10 bis 40 phr cis-1,4-Polyisopren enthält. Diese Ausführungsform bietet im Vergleich zu Mischungen die kein cis-1,4-Polyisopren enthalten vermutlich durch synergistische Effekte von cis-1,4-Polyisopren, Ruß und Kieselsäure, Silan-Kupplungsagens und Organosilan deutliche Vorteile im Naßgriff.

Zusätzlich zu den genannten Kautschuken kann die Mischung aber auch noch andere Kautschuktypen wie Styrol-lsopren-Butadien-Terpolymer, Acrylnitril-Butadien-Styrol-Terpolymer, Acrylnitril-Butadien-Kautschuk, Butylkautschuk und Halobutylkautschuk sowie Verschnitte aus allen bisher genannten Kautschuken enthalten.

Als weitere Füllstoffe können der erfindungsgemäßen Kautschukmischung alle aus dem Stand der Technik bekannten Füllstoffe zugemischt werden, dabei sind beispielsweise Aluminiumoxide, Alumosilicate, Kreide, Stärke und Magnesiumoxid zu nennen.

Des weiteren kann die erfindungsgemäße Kautschukmischung übliche Zusatzstoffe in üblichen Gewichtsteilen enthalten. Zu diesen Zusatzstoffen zählen Alterungsschutzmittel, wie z. B. N-Phenyl-N'-(1,3-dimethylbutyl)-p-phenylendiamin (6PPD), 2,2,4-Trimethyl-1,2-dihydrochinolin (TMQ) und andere Substanzen wie sie beispielsweise aus J. Schnetger, Lexikon der Kautschuktechnik, 2. Auflage, Hüthig Buch Verlag, Heidelberg, 1991, S. 42-48 bekannt sind, Verarbeitungshilfsmittel und Weichmacher, wie z. B. Zinkoxid und Fettsäuren wie Stearinsäure, aromatische, naphthenische und/oder paraffinische Prozeßöle, Rapsöl und Wachse, und Mastikationshilfsmittel wie z. B. 2,2'-Dibenzamidodiphenyldisulfid (DBD).

Die Vulkanisation wird in Anwesenheit von Schwefel oder Schwefelspendern durchgeführt, wobei einige Schwefelspender zugleich als Vulkanisationsbeschleuniger wirken können. Als Schwefelspender können dabei beispielsweise Thiuramderivate wie Tetramethylthiuramdisulfid und Dipentamethylenthiuramtetrasulfid, Morpholinderivate wie Dimorpholyldisulfid, Dimorpholyltetrasulfid und 2-Morpholinodithiobenzothiazol sowie Caprolactamdisulfid verwendet werden. Schwefel oder Schwefelspender werden im letzten Mischungschritt in den vom Fachmann gebräuchlichen Mengen (0,4 bis 4 phr, Schwefel bevorzugt in Mengen von 1,5 bis 2,5 phr) der Kautschukmischung zugesetzt.

Des weiteren kann die Kautschukmischung vulkanisationsbeeinflussende Substanzen wie Vulkanisationsbeschleuniger, Vulkanisationsverzögerer und Vulkanisationsaktivatoren in üblichen Mengen enthalten, um die erforderliche Zeit und/oder die erforderliche Temperatur der Vulkanisation zu kontrollieren und die Vulkanisateigenschaften zu verbessern. Die Vulkanisationsbeschleuniger können dabei zum Beispiel ausgewählt sein aus folgenden Beschleunigergruppen: Thiazolbeschleuniger wie z. B. 2-Mercaptobenzothiazol, Sulfenamidbeschleuniger wie z. B. Benzothiazyl-2-cyclohexylsulfenamid, Guanidinbeschleuniger wie z. B. Diphenylguanidin, Thiurambeschleuniger wie z. B. Tetrabenzylthiuramdisulfid, Dithiocarbamatbeschleuniger wie z. B. Zinkdibenzyldithiocarbamat, Aminbeschleuniger wie z. B. Cyclohexylethylamin, Thioharnstoffe wie z. B. Ethylenthioharnstoff, Xanthogenatbeschleuniger, Disulfide. Die Beschleuniger können auch in Kombination miteinander eingesetzt werden, wobei sich synergistische Effekte ergeben können.

Die Herstellung der erfindungsgemäßen Kautschukmischung erfolgt auf herkömmliche Art und Weise in einer oder mehreren Mischstufen. Anschließend wird diese weiterverarbeitet z. B. durch einen Extrusionsvorgang und in die entsprechende Form z. B. eines Laufstreifenrohlings gebracht. Ein so erzeugter Laufstreifenmischungsrohling wird bei der Herstellung des Reifenrohlings, insbesondere Fahrzeugluftreifenrohlings, wie bekannt aufgelegt. Nach der Vulkanisation des Reifens weist dieser Vorteile im Abriebverhalten, bei den Wintereigenschaften und im Trockenbremsen bei gleichzeitig gutem Naßgriff und geringem Rollwiderstand im Vergleich zu Reifen, die einen Laufstreifen aus einer Kautschukmischung aus dem Stand der Technik besitzen, auf. Dabei ist es unerheblich, ob der gesamte Laufstreifen aus einer einzigen Mischung hergestellt worden ist oder z. B. einen Cap- und Base-Aufbau aufweist, denn wichtig ist, daß zumindest die mit der Fahrbahn in Berührung kommende Fläche aus der erfindungsgemäßen Kautschukmischung hergestellt worden ist.

Die Erfindung soll nun anhand von einigen Ausführungsbeispielen, die in den Tabelle 1 bis 3 zusammengefaßt sind, näher erläutert werden, ohne jedoch auf diese Beispiele beschränkt zu sein.

Bei sämtlichen in den Tabellen 1, 2 und 3 enthaltenen Mischungsbeispielen sind die angebenen Mengenangaben Gewichtsteile, die auf 100 Gewichtsteile Gesamtkautschuk bezogen sind (phr).

Sämtliche Mischungsrezepturen in der Tabelle 1 stimmen bezüglich des Polymerverschnittes (S-SBR und Polybutadien), der Anteile an Ruß, Kieselsäure, Zinkoxid, Stearinsäure, Alterungsschutzmittel, Verarbeitungshilfsmittel, Schwefel und Vulkanisationsbeschleuiger überein. Die Mischungsbeispiele enthalten außerdem Öle, wobei in der Vergleichsmischung 1 der Anteil an Ölen etwas erhöht wurde, um den Modul und die Härte der aus den Mischungen hergestellten Vulkanisate vergleichbar zu halten.

Es kamen unterschiedliche Silan-Kupplungsagenzien in den Vergleichsbeispielen zum Einsatz. Dabei handelte es sich zum einen um 3,3'-Bis(triethoxysilylpropyl)tetrasulfid (Silan-Kupplungsagens 1), zum anderen um ein 3,3'-Bis(triethoxysilylpropyl)polysulfid mit einem Disulfidanteil von mehr als 80 % (Silan-Kupplungsagens 2) und um ein 3,3'-Bis(triethoxysilylpropyl)polysulfid mit der folgenden Zusammensetzung: 69 bis 79 % Disulfidanteil, 21 bis 31 % Trisulfidanteil und 0 bis 8 % Tetrasulfidanteil (Silan-Kupplungsagens 3). Die verschiedenen Silan-Kupplungsagenzien wurden in den Vergleichsbeispielen 1 bis 3 in unterschiedlichen phr-Mengen eingesetzt, um vergleichbare Molzahlen der Silan-Kupplungsagenzien in den Mischungen zu erhalten.

Beispielhaft ausgehend von Vergleichsmischung 3 wurde diese Mischung für die erfindungsgemäßen Mischungen 1 bis 4 derart modifiziert, daß sie unterschiedliche Mengen 3,3'-Bis(triethoxysilylpropyl)monosulfid als Organosilan mit der allgemeinen Formel Z-R¹-X-R¹-Z enthielt. Dabei entsprechen die in den erfindungsgemäßen Mischungen angegebenen phr an 3,3'-Bis(triethoxysilylpropyl)monosulfid folgenden Molmengen an 3,3'-Bis(triethoxysilylpropyl)monosulfid pro mol Silan-Kupplungsagens: 0,26 phr entspricht 0.05 mol pro mol Silan-Kupplungsagens, 1,03 phr entspricht 0.2 mol pro mol Silan-Kupplungsagens, 2,06 phr entspricht 0.4 mol pro mol Silan-Kupplungsagens und 3,09 phr entspricht 0.6 mol pro mol Silan-Kupplungsagens.

Das Organosilan und das Silan-Kupplungsagens können dabei sowohl getrennt voneinander zur Mischung gegeben werden, als auch vorab vermengt oder zusammen synthetisiert und dann gemeinsam zur Mischung gegeben werden.

In der Tabelle 2 sind die Vergleichsmischung 3, eine Vergleichsmischung 4 ohne Ruß und die erfindungsgemäßen Mischung 2 und 5 aufgeführt. Der Rußgehalt wurde variiert. Der Anteil an Ölen wurde in der Vergleichsmischung 4 und in der erfindungsgemäßen Mischung 5 verändert, um den Modul und die Härte der aus den Mischungen hergestellten Vulkanisate vergleichbar zu halten

Mischungen mit einem Polymerverschnitt aus S-SBR, Polybutadien und Naturkautschuk zeigt Tabelle 3.

Aus sämtlichen Mischungen wurden zum einen Prüfkörper durch 21-minütige Vulkanisation in einer Presse bei 150° C hergestellt und mit diesen danach für die Kautschukindustrie typische Materialeigenschaften bestimmt. Zum anderen wurden Reifen mit Laufstreifen aus den angegebenen Mischungen hergestellt und die für die Erfindung wesentlichen Reifeneigenschaften bestimmt. Für die Tests an Prüfkörpern wurden folgende Testverfahren angewandt:
- Bruchdehnung bei Raumtemperatur gemäß DIN 53 504
- Spannungswert 100 und 300 % bei Raumtemperatur gemäß DIN 53 504
- Shorehärte (ShA) bei Raumtemperatur gemäß DIN 53 505
- Rückprallelastizität bei Raumtemperatur und 70 °C gemäß DIN 53 512
- Abrieb gemäß DIN 53 516

Dem Abrieb und den verschiedenen Reifeneigenschaften der Vergleichsmischung 3 (Laufflächenmischung mit Silan-Kupplungsagens 3) wurden stellvertretend für S-SBR und Polybutadien enthaltende Mischungen und der Vergleichsmischung 5 wurden stellvertretend für S-SBR, Polybutadien und Naturkautschuk enthaltende Mischungen jeweils der Wert 100 zugeordnet und Werte > 100 stellen eine Verbesserung der entsprechenden Eigenschaft dar.

**Tabelle 1**

| | ***Vergleichsmischungen*** | | | | ***Erfindungsgemäße Mischungen*** | | | |
|---|---|---|---|---|---|---|---|---|
| **Bestandteile** | **Einheit** | **1** | **2** | **3** | **1** | **2** | **3** | **4** |
| cis-1,4-Polybutadien | phr | 45 | 45 | 45 | 45 | 45 | 45 | 45 |
| S-SBR | phr | 55 | 55 | 55 | 55 | 55 | 55 | 55 |
| Kieselsäure VN3 | phr | 80 | 80 | 80 | 80 | 80 | 80 | 80 |
| Ruß N339 | phr | 15 | 15 | 15 | 15 | 15 | 15 | 15 |
| Öle (gesamt) | phr | 38 | 33 | 33 | 33 | 33 | 33 | 33 |
| Zinkoxid | phr | 2 | 2 | 2 | 2 | 2 | 2 | 2 |
| Silan-Kupplungsagens 1∗ | phr | 6,20 | - | - | - | - | - | - |
| Silan-Kupplungsagens 2∗∗ | phr | - | 5,56 | - | - | - | - | - |
| Silan-Kupplungsagens 3∗∗∗ | phr | - | - | 5,64 | 5,64 | 5,64 | 5,64 | 5,64 |
| Organosilan Z-R¹-X-R¹-Z∗∗∗∗ | phr | - | - | - | 0,26 | 1,03 | 2,06 | 3,09 |
| Stearinsäure | phr | 1 | 1 | 1 | 1 | 1 | 1 | 1 |
| Alterungsschutzmittel | phr | 2 | 2 | 2 | 2 | 2 | 2 | 2 |
| Schwefel | phr | 1,7 | 1,7 | 1,7 | 1,7 | 1,7 | 1,7 | 1,7 |
| Beschleuniger | phr | 4 | 4 | 4 | 4 | 4 | 4 | 4 |

| **Eigenschaften** | | | | | | | | |
|---|---|---|---|---|---|---|---|---|
| Shorehärte bei RT | ShA | 66 | 66 | 66 | 65 | 66 | 67 | 68 |
| Spannungswert 100 % | N/mm² | 2,4 | 2,0 | 2,0 | 2,0 | 2,2 | 2,4 | 2,5 |
| Spannungswert 300 % | N/mm² | 10,2 | 8,1 | 8,0 | 8,1 | 9,0 | 9,6 | 10,1 |
| Rückprallelastizität bei RT | % | 33 | 33 | 33 | 33 | 33 | 33 | 32 |
| Rückprallelastizität bei 70°C | % | 47 | 47 | 47 | 47 | 47 | 47 | 47 |
| Bruchdehnung bei RT | % | 470 | 540 | 550 | 540 | 490 | 480 | 478 |
| DIN-Abrieb | | 95 | 102 | 100 | 108 | 110 | 114 | 121 |
| Traktion auf Schnee | | 100 | 99 | 100 | 105 | 104 | 102 | 102 |
| Trockenbremsen | | 100 | 99 | 100 | 102 | 103 | 103 | 104 |
| Naßrutschverhalten beim ABS-Bremsen | | 98 | 100 | 100 | 101 | 101 | 100 | 99 |
| Rollwiderstand | | 104 | 99 | 100 | 100 | 100 | 100 | 99 |
| Aquaplaning lateral | | 100 | 100 | 100 | 101 | 102 | 102 | 104 |

| | | | | | | | | |
|---|---|---|---|---|---|---|---|---|
| ∗ 3,3'-Bis(triethoxysilylpropyl)tetrasulfid | | | | | | | | |
| ∗∗ 3,3'-Bis(triethoxysilylpropyl)polysulfid mit einem Disulfidanteil von mehr als 80 % | | | | | | | | |
| ∗∗∗ 3,3' -Bis(triethoxysilylpropyl)polysulfid mit der folgenden Zusammensetzung: 69 bis 79 % Disulfidanteil, 21 bis 31 % Trisulfidanteil und 0 bis 8 % Tetrasulfidanteil | | | | | | | | |
| ∗∗∗∗ 3,3'-Bis(triethoxysilylpropyl)monosulfid | | | | | | | | |

Die Spannungswerte in Tabelle 1 nehmen für die erfindungsgemäßen Mischungen ausgehend vom Vergleichsbeispiel 3 mit steigendem Organosilangehalt zu. Zugleich nimmt die Härte leicht zu. Dieser zusätzliche Verstärkungseffekt, wie ihn die steigenden Spannungswerte belegen, hat eine Verbesserung in den Abriebeigenschaften zur Folge. Die Rückprallelastizitäten bei Raumtemperatur und bei 70 °C sind dagegen bei fast allen Mischungen gleich. Dies deutet darauf hin, daß man für die Reifeneigenschaften Naßgriff und Rollwiderstand kaum Veränderungen zu erwarten hat. Die Bestimmung des DIN-Abriebs und der Reifeneigenschaften bestätigen diese Aussagen.

Die Vergleichsbeispiele 1 und 2 in Tabelle 1 veranschaulichen im Zusammenhang mit Vergleichsbeispiel 3 den Effekt unterschiedlicher Silan-Kupplungsagenzien in den Mischungen. Vergleichsmischung 1 mit 3,3'-Bis(triethoxysilylpropyl)tetrasulfid als Silan-Kupplungsagens zeigt gegenüber Vergleichsmischung 3 Nachteile im Naßgriff und im Abrieb. Vergleichsmischung 2 mit 3,3'-Bis(triethoxysilylpropyl)polysulfid mit einem Disulfidanteil von mehr als 80 % zeigt gegenüber Vergleichsmischung 3 den gleichen Naßgriff und hat Vorteile im Abrieb. Die übrigen Reifeneigenschaften verbleiben auf vergleichbarem Niveau. Mit den erfindungsgemäßen Mischungen jedoch kann eine deutliche Verbesserung des Abriebs bei verbesserter Traktion auf Schnee und verbessertem Trockenbremsen und Aquaplaningverhalten in Querrichtung erreicht werden, ohne daß Nachteile im Naßgriff beim ABS-Bremsen hingenommen werden müssen. Außerdem bleibt der Rollwiderstand auf gleichem Niveau.

Bei Zudosierung des 3,3'-Bis(triethoxysilylpropyl)monosulfid zu den Vergleichsmischungen 1 und 2 wurde ein analoges Verhalten bezüglich der resultierenden Eigenschaften beobachtet. Auch in diesen Fällen konnten Werte der konträren Reifeneigenschaften Naßgriff und Abrieb/Wintereigeschaften/Rollwiderstand auf höherem Niveau und eine Verbesserung des Trockenbremsens erreicht werden. Erfindungsgemäß können nun Vulkanisate aus kieselsäurehaltigen Mischungen hergestellt werden, die durch verbessertes Abriebverhalten eine höhere Haltbarkeit gewährleisten. Außerdem können Reifen, insbesondere Fahrzeugluftreifen, mit Kieselsäure-Laufflächenmischungstechnologie bereitgestellt werden, die ein verbessertes Abriebverhalten, eine verbesserte Traktion auf Schnee und verbessertes Trockenbremsen und Aquaplaningverhalten in Querrichtung aufweisen, ohne daß dabei Einbußen in den anderen gewünschten Reifeneigenschaften Naßgriff und Rollwiderstand hingenommen werden müssen.

**Tabelle 2**

| | ***Vergleichsmischungen*** | | | ***Erfindungsgemäße Mischungen*** | |
|---|---|---|---|---|---|
| **Bestandteile** | **Einheit** | **3** | **4** | **2** | **5** |
| cis-1,4-Polybutadien | phr | 45 | 45 | 45 | 45 |
| S-SBR | phr | 55 | 55 | 55 | 55 |
| Kieselsäure VN3 | phr | 80 | 80 | 80 | 80 |
| Ruß N339 | phr | 15 | - | 15 | 30 |
| Öle (gesamt) | phr | 33 | 23 | 33 | 43 |
| Zinkoxid | phr | 2 | 2 | 2 | 2 |
| Silan-Kupplungsagens 3*** | phr | 5,64 | 5,64 | 5,64 | 5,64 |
| Organosilan Z-R¹-X-R¹-Z**** | phr | - | 1,03 | 1,03 | 1,03 |
| Stearinsäure | phr | 1 | 1 | 1 | 1 |
| Alterungsschutzmittel | phr | 2 | 2 | 2 | 2 |
| Schwefel | phr | 1,7 | 1,7 | 1,7 | 1,7 |
| Beschleuniger | phr | 4 | 4 | 4 | 4 |

| **Eigenschaften** | | | | | |
|---|---|---|---|---|---|
| Shorehärte bei RT | ShA | 66 | 65 | 66 | 68 |
| Spannungswert 100 % | N/mm² | 2,0 | 2,1 | 2,2 | 2,4 |
| Spannungswert 300 % | N/mm² | 8,0 | 8,5 | 9,0 | 10,1 |
| Rückprallelastizität bei RT | % | 33 | 35 | 33 | 2,9 |
| Rückprallelastizität bei 70°C | % | 47 | 50 | 47 | 43 |
| Bruchdehnung bei RT | % | 550 | 460 | 490 | 452 |
| DIN-Abrieb | | 100 | 100 | 110 | 108 |
| Traktion auf Schnee | | 100 | 102 | 104 | 103 |
| Trockenbremsen | | 100 | 98 | 103 | 105 |
| Naßrutschverhalten beim ABS-Bremsen | | 100 | 98 | 101 | 103 |
| Rollwiderstand | | 100 | 104 | 100 | 96 |
| Aquaplaning lateral | | 100 | 92 | 102 | 110 |

| | | | | | |
|---|---|---|---|---|---|
| *** 3,3'-Bis(triethoxysilylpropyl)polysulfid mit der folgenden Zusammensetzung: 69 bis 79 % Disulfidanteil, 21 bis 31 % Trisulfidanteil und 0 bis 8 % Tetrasulfidanteil | | | | | |
| **** 3,3'-Bis(triethoxysilylpropyl)monosulfid | | | | | |

Tabelle 2 macht deutlich, daß die erfindungsgemäßen Mischungen nur mit Zudosierung von Ruß die gewünschten Effekte im Reifen ergeben. Ruß, Kieselsäure, Silan-Kupplungsagens und Organosilan der allgemeinen Formel Z-R¹-X-R¹-Z müssen in Kombination in der Mischung vorliegen. Fehlt Ruß wie in der Vergleichsmischung 4, so wird das Aquaplaningverhalten des Reifens in Querrichtung, also beim Kurvenfahren, deutlich schlechter und auch im Trockenbremsen hat man Nachteile. Dosiert man über 30 phr Ruß zu der Kautschukmischung, so muß man deutliche Abstriche im Rollwiderstand machen.

**Tabelle 3**

| | ***Vergleichsmischung*** | | ***Erfindungsgemäße Mischung*** |
|---|---|---|---|
| **Bestandteile** | **Einheit** | **5** | **6** |
| cis-1,4-Polybutadien | phr | 25 | 25 |
| Naturkautschuk | phr | 30 | 30 |
| S-SBR | phr | 45 | 45 |
| Kieselsäure VN3 | phr | 80 | 80 |
| Ruß N339 | phr | 15 | 15 |
| Öle (gesamt) | phr | 33 | 33 |
| Zinkoxid | phr | 2 | 2 |
| Silan-Kupplungsagens 3*** | phr | 5,64 | 5,64 |
| Organosilan Z-R¹-X-R¹-Z**** | phr | - | 1,03 |
| Stearinsäure | phr | 1 | 1 |
| Alterungsschutzmittel | phr | 2 | 2 |
| Schwefel | phr | 1,7 | 1,7 |
| Beschleuniger | phr | 4 | 4 |

| **Eigenschaften** | | | |
|---|---|---|---|
| Shorehärte bei RT | ShA | 66 | 65 |
| Spannungswert 100 % | N/mm² | 2,2 | 2,1 |
| Spannungswert 300 % | N/mm² | 9,0 | 8,8 |
| Rückprallelastizität bei RT | % | 32 | 32 |
| Rückprallelastizität bei 70°C | % | 46 | 46 |
| Bruchdehnung bei RT | % | 480 | 470 |
| DIN-Abrieb | | 100 | 115 |
| Traktion auf Schnee | | 100 | 103 |
| Trockenbremsen | | 100 | 102 |
| Naßrutschverhalten beim ABS-Bremsen | | 100 | 100 |
| Rollwiderstand | | 100 | 100 |
| Aquaplaning lateral | | 100 | 101 |

| | | | |
|---|---|---|---|
| *** 3,3'-Bis(triethoxysilylpropyl)polysulfid mit der folgenden Zusammensetzung: 69 bis 79 % Disulfidanteil, 21 bis 31 % Trisulfidanteil und 0 bis 8 % Tetrasulfidanteil | | | |
| **** 3,3'-Bis(triethoxysilylpropyl)monosulfid | | | |

Tabelle 3 zeigt Kautschukmischungen, die S-SBR, Polybutadien und Naturkautschuk enthalten (Tabelle 3) und die i. a. im Naßgriffniveau über den in den Tabellen 1 und 2 genannten S-SBR/Polybuatdien-Mischungen liegen. Auch bei diesen Mischungen kann durch die erfindungsgemäße Kombination von Ruß, Kieselsäure, Silan-Kupplungsagens und Organosilan der allgemeinen Formel Z-R¹-X-R¹-Z das Abriebverhalten von Kautschukvulkanisaten verbessert werden, ohne daß dabei Einbußen in den anderen Reifeneigenschaften hingenommen werden müssen.

## Patentansprüche

1. Schwefelvernetzbare Kautschukmischung für die Herstellung von Laufstreifen für Reifen, die als Kautschukkomponenten zumindest Styrol-Butadien-Copolymer und gegebenenfalls Polybutadien und/oder Polyisopren, als Füllstoffe zumindest Ruß und Kieselsäure, zumindest ein Silan-Kupplungsagens sowie weitere übliche Zusatzstoffe enthält,
**dadurch gekennzeichnet,**
**daß** die Kautschukmischung 5 bis 30 phr (Gewichtsteile bezogen auf 100 Gewichtsteile der gesamten Kautschukkomponenten) Ruß, 10 bis 100 phr Kieselsäure, pro Gewichtsteil Kieselsäure 0,01 bis 0,15 Gewichtsteile Silan-Kupplungsagens sowie pro mol Silan-Kupplungsagens 0,05 bis 1 mol zumindest eines Organosilans mit der allgemeinen Formel
Z-R¹-X-R¹-Z
enthält,
wobei Z ausgewählt ist aus der Gruppe bestehend aus: 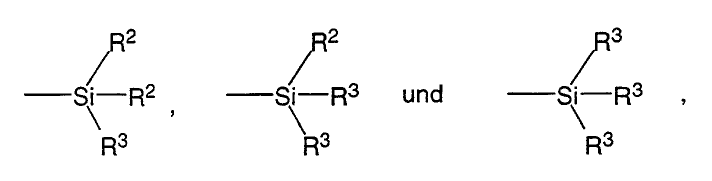 worin R² eine Alkylgruppe mit 1 bis 4 Kohlenstoffatomen, eine Cycloalkylgruppe mit 5 bis 8 Kohlenstoffatomen oder ein Phenylrest ist, wobei die R² in einem Molekül gleich oder verschieden sein können, R³ eine Alkoxygruppe mit 1 bis 4 Kohlenstoffatomen, eine Cycloalkoxygruppe mit 5 bis 8 Kohlenstoffatomen oder ein Phenoxygruppe ist, wobei die R³ in einem Molekül gleich oder verschieden sein können,
wobei R¹ eine substituierte oder unsubstituierte, gegebenenfalls ungsättigte, gegebenenfalls cyclische, Alkylengruppe mit insgesamt 1 bis 18 Kohlenstoffatomen oder eine substituierte oder unsubstituierte Arylengruppe mit insgesamt 6 bis 12 Kohlenstoffatomen ist, wobei die R¹ in einem Molekül gleich oder verschieden sein können,
und wobei X ein Schwefelatom, ein Sauerstoffatom oder eine CH₂-Gruppe ist.

2. Kautschukmischung nach Anspruch 1, **dadurch gekennzeichnet, daß** das Verhältnis von Kieselsäure zu Ruß in der Kautschukmischung größer oder gleich 3:1 ist.

3. Kautschukmischung nach Anspruch 1 oder 2, **dadurch gekennzeichnet, daß** X ein Schwefelatom ist.

4. Kautschukmischung nach Anspruch 3, **dadurch gekennzeichnet, daß** die Kautschukmischung als Organosilan 3,3'-Bis(triethoxysilylpropyl)monosulfid enthält.

5. Kautschukmischung nach zumindest einem der Ansprüche 1 bis 4, **dadurch gekennzeichnet, daß** die Kautschukmischung 60 bis 90 phr Kieselsäure, pro Gewichtsteil Kieselsäure 0,05 bis 0,1 Gewichtsteile Silan-Kupplungsagens sowie pro mol Silan-Kupplungsagens 0,05 bis 0,6 mol zumindest eines Organosilans mit der angegebenen allgemeinen Formel enthält.

6. Kautschukmischung nach zumindest einem der Ansprüche 1 bis 5, **dadurch gekennzeichnet, daß** die Kautschukmischung als Silan-Kupplungsagens zumindest ein Organosilanpolysulfid mit 2 bis 8 Schwefelatomen enthält.

7. Kautschukmischung nach zumindest einem der Ansprüche 1 bis 6, **dadurch gekennzeichnet, daß** die Kautschukmischung 5 bis 100 phr lösungspolymerisiertes Styrol-Butadien-Copolymer, 0 bis 60 phr Polybutadien und 0 bis 60 phr cis-1,4-Polyisopren enthält.

8. Kautschukmischung nach Anspruch 7, **dadurch gekennzeichnet, daß** die Kautschukmischung 10 bis 80 phr lösungspolymerisiertes Styrol-Butadien-Copolymer, 10 bis 50 phr Polybutadien und 10 bis 40 phr cis-1,4-Polyisopren enthält.

9. Kautschukmischung nach zumindest einem der Ansprüche 1 bis 8, **dadurch gekennzeichnet, daß** das Polyisopren Naturkautschuk ist.

10. Fahrzeugluftreifen enthaltend einen Reifenlaufstreifen, der zumindest zum Teil aus einer Kautschukmischung nach zumindest einem der Ansprüche 1 bis 9 besteht.

## Claims

1. Sulphur-cross-linkable rubber mixture for the production of tread strips for tyres, which mixture contains, as the rubber components, at least styrene-butadiene copolymer and possibly polybutadiene and/or polyisoprene, as fillers at least carbon black and silica, at least one silane coupling agent and additional conventional additives, **characterised in that** the rubber mixture contains 5 to 30 phr (parts by weight relative to 100 parts by weight of the entire rubber components) carbon black, 10 to 100 phr silica, per part by weight silica 0.01 to 0.15 parts by weight silane coupling agent and per mol silane coupling agent 0.05 to 1 mol at least of one organosilane having the general formula
Z-R¹-X-R¹-Z,
Z being selected from the group comprising: 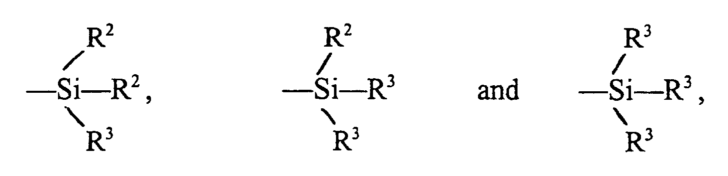 wherein R² is an alkyl group having 1 to 4 carbon atoms, a cycloalkyl group having 5 to 8 carbon atoms or a phenyl residue, R² being able to be identical or different in one molecule, R³ is an alkoxy group having 1 to 4 carbon atoms, a cycloalkoxy group having 5 to 8 carbon atoms or a phenoxy group, R³ being able to be identical or different in one molecule,
wherein R¹ is a substituted or unsubstituted, possibly unsaturated, possibly cyclic, alkylene group having a total of 1 to 18 carbon atoms or a substituted or unsubstituted arylene group having a total of 6 to 12 carbon atoms, R¹ being able to be identical or different in one molecule,
and wherein X is a sulphur atom, an oxygen atom or a CH₂ group.

2. Rubber mixture according to claim 1, **characterised in that** the ratio of silica to carbon black in the rubber mixture is greater than or equal to 3:1.

3. Rubber mixture according to claim 1 or 2, **characterised in that** X is a sulphur atom.

4. Rubber mixture according to claim 3, **characterised in that** the rubber mixture contains, as the organosilane, 3,3'-bis(triethoxysilylpropyl)monosulphide.

5. Rubber mixture according to at least one of claims 1 to 4, **characterised in that** the rubber mixture contains 60 to 90 phr silica, per part by weight silica 0.05 to 0.1 parts by weight silane coupling agent, and per mol silane coupling agent 0.05 to 0.6 mol at least of one organosilane having the given general formula.

6. Rubber mixture according to at least one of claims 1 to 5, **characterised in that** the rubber mixture contains, as the silane coupling agent, at least one organosilane polysuphide having 2 to 8 sulphur atoms.

7. Rubber mixture according to at least one of claims 1 to 6, **characterised in that** the rubber mixture contains 5 to 100 phr solution-polymerised styrene-butadiene copolymer, 0 to 60 phr polybutadiene and 0 to 60 phr cis-1,4-polyisoprene.

8. Rubber mixture according to claim 7, **characterised in that** the rubber mixture contains 10 to 80 phr solution-polymerised styrene-butadiene copolymer, 10 to 50 phr polybutadiene and 10 to 40 phr cis-1,4-polyisoprene.

9. Rubber mixture according to at least one of claims 1 to 8, **characterised in that** the polyisoprene is natural rubber.

10. Pneumatic vehicle tyre, containing a tyre tread strip which is formed, at least partially, from a rubber mixture according to at least one of claims 1 to 9.

## Revendications

1. Composition de caoutchouc réticulable au soufre pour la fabrication de bandes de roulement de pneumatiques, contenant au moins copolymère styrène butadiène en tant que composant de caoutchouc et, le cas échéant, polybutadiène et/ou polyisoprène, au moins suie et acide silique en tant que matières de charge et au moins un agent d'accouplement au silane ainsi que les additifs habituels, **caractérisée en ce que**
la composition de caoutchouc contient 5 à 30 % (parties pondérales par rapport à 100 parties pondérales de la totalité des composants de caoutchouc) de suie, 10 à 100 % d'acide silique, par partie pondérale d'acide silique 0,01 à 0,15 parties pondérales d'agents d'accouplement au silane, ainsi que par mol d'agent d'accouplement au silane 0,05 à 1 mol d'au moins un organosilane de la formule générale
Z-R¹-X-R¹-Z,
où Z a été sélectionné dans un groupe constitué de : 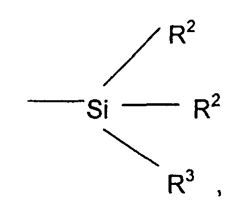 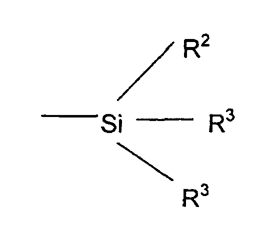 et 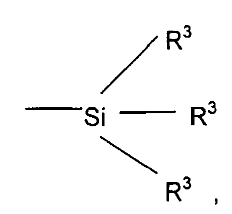 dans lequel R² représente un groupe alkyle de 1 à 4 atomes de carbone, un groupe cycloalkyle de 5 à 8 atomes de carbone ou un radical phényle et où les R² dans une molécule peuvent être identiques ou différents, R³ représente un groupe alkoxy de 1 à 4 atomes de carbone, un groupe cycloalkoxy de 5 à 8 atomes de carbone ou un groupe phénoxy et où les R³ dans une molécule peuvent être identiques ou différents,
ou R¹ représente un groupe alkylène substitué ou non substitué, le cas échéant insaturé, le cas échéant cyclique, de 1 à 18 atomes de carbone au total, ou un groupe arylène substitué ou non substitué de 6 à 12 atomes de carbone au total et ou les R¹ dans une molécule peuvent être identiques ou différents,
et où X représente un atome de soufre, un atome d'oxygène ou un groupe CH₂.

2. Composition de caoutchouc selon la revendication 1, **caractérisée en ce que** la proportion d'acide silique par rapport à la suie dans la composition de caoutchouc est supérieure ou égare à 3 : 1.

3. Composition de caoutchouc selon la revendication 1 ou 2, **caractérisée en ce que** X représente un atome de soufre.

4. Composition de caoutchouc selon la revendication 3, **caractérisée en ce que** la composition de soufre contient 3,3'-bis(triéthoxysilylpropyl)monosulfure en tant qu'organosilane.

5. Composition de caoutchouc selon au moins l'une des revendications 1 à 4, **caractérisée en ce que** la composition de caoutchouc contient 60 à 90 % d'acide silique, 0,05 à 0,1 parts pondérales d'agent d'accouplement silane par part pondérale d'acide silique, ainsi que 0,05 à 0,6 mol d'au moins un organosilane de la formule générale mentionnée par mol d'agent d'accouplement silane.

6. Composition de caoutchouc selon au moins l'une des revendications 1 à 5, **caractérisée en ce que** la composition de caoutchouc contient, en tant qu'agent d'accouplement silane, au moins un polysulfure d'organosilane de 2 à 8 atomes de soufre.

7. Composition de caoutchouc selon au moins l'une des revendications 1 à 6, **caractérisée en ce que** la composition de caoutchouc contient 5 à 100 % de copolymère styrène butadiène polymérisé en solution , 0 à 60 % de polybutadiène et 0 à 60 % de cis-1,4-polyisoprène.

8. Composition de caoutchouc selon la revendication 7, **caractérisée en ce que** la composition de caoutchouc contient 10 à 80 % de copolymère styrène butadiène polymérisé en solution, 10 à 50 % de polybutadiène et 10 à 40 % de cis-1,4-polyisoprène.

9. Composition de caoutchouc selon au moins l'une des revendications 1 à 8, **caractérisée en ce que** le polyisoprène est du caoutchouc naturel.

10. Pneumatique pour véhicules comportant une bande de roulement de pneumatique constituée au moins en partie par une composition de caoutchouc selon au moins l'une des revendications 1 à 9.
